# EUROPÄISCHE PATENTSCHRIFT

(11) **EP 3 887 214 B1**
(45) Veröffentlichungstag und Bekanntmachung des Hinweises auf die Patenterteilung: **26.04.2023**
(21) Anmeldenummer: 19802137.0
(22) Anmeldetag: 07.11.2019
(51) Int. Cl.: B60S 1/50, B62D 25/08

(54) **ANORDNUNG EINES SEPARATEN FUNKTIONSELEMENTS EINES WASCHWASSERBEHÄLTERS AN EINEM FIXIERABSCHNITT EINES STRUKTURBAUTEILS**
ARRANGEMENT OF A SEPARATE FUNCTIONAL ELEMENT OF A WASHER WATER RESERVOIR ON A FIXING PORTION OF A STRUCTURAL COMPONENT
AGENCEMENT D'UN ÉLÉMENT FONCTIONNEL SÉPARÉ D'UN RÉSERVOIR D'EAU DE LAVAGE SUR UNE SECTION DE FIXATION D'UN COMPOSANT STRUCTUREL

(30) Priorität: 26.11.2018 DE 102018220292
(43) Veröffentlichungstag der Anmeldung: 06.10.2021
(73) Patentinhaber: VOLKSWAGEN AKTIENGESELLSCHAFT, 38440 Wolfsburg (DE)
(72) Erfinder: IPPOLITI, Mario, 38444 Wolfsburg (DE); MERZ, Thorsten Tobias, 38165 Lehre (Flechtorf) (DE); KRÜGER, Stefan, 38486 Klötze (DE)
(86) Internationale Anmeldenummer: PCT/EP2019/080617
(87) Internationale Veröffentlichungsnummer: WO 2020/108949

(56) Entgegenhaltungen:
- CN-U- 206 344 792
- DE-A1-102015 209 348
- JP-A- 2012 116 274
- US-B2- 8 109 560

## Beschreibung

Die Erfindung betrifft eine Anordnung eines separaten Funktionselements eines Waschwasserbehälters an einem Fixierabschnitt eines Strukturbauteils und insbesondere die Anordnung eines Befüllstutzens eines Waschwasserbehälters an einem Fixierabschnitt eines Kraftfahrzeug-Schlossträgers. Die Erfindung betrifft ferner ein Kraftfahrzeug mit einer solchen Anordnung.

Aus der gattungsgemäßen DE 10 2015 209348 A1 ist ein als Trägerteil bezeichnetes Strukturbauteil eines Kraftfahrzeuges mit einer ersten Fläche und mindestens einer zweiten Fläche bekannt, wobei die erste Fläche und die zweite Fläche über eine Verbindungskante miteinander verbunden sind. Das Trägerteil weist ferner eine Lasche zur Befestigung eines als separates Element bezeichneten Funktionselements auf, wobei die Lasche als Verlängerung der zweiten Fläche ausgebildet ist. Die Verbindungskante weist im Bereich der Lasche eine erste Richtungsänderung und mindestens eine zweite Richtungsänderung auf. Durch diese Gestaltung soll das Trägerteil kostengünstig herstellbar sein und eine hohe Steifigkeit im Bereich der Lasche aufweisen.

Der Erfindung liegt die Aufgabe zugrunde, eine Anordnung eines Funktionselements eines Waschwasserbehälters an einem Fixierabschnitt eines Strukturbauteils sowie ein Kraftfahrzeug mit einer solchen Anordnung zur Verfügung zu stellen, welche jeweils eine einfache Montage und einen besonders sicheren Halt der Anordnung ermöglichen.

Die Lösung der Aufgabe erfolgt erfindungsgemäß mit den Merkmalen des unabhängigen Anspruchs.

Weitere praktische Ausführungsformen und Vorteile der Erfindung sind in Verbindung mit den abhängigen Ansprüchen beschrieben.

Die Erfindung betrifft die Anordnung eines separaten Funktionselements eines Waschwasserbehälters an einem entsprechenden Fixierabschnitt eines Strukturbauteils eines Kraftfahrzeuges. Bei dem separaten Funktionselement handelt es sich insbesondere um einen Befüllstutzen für den Waschwasserbehälter. Das Funktionselement weist vorzugsweise einen Befestigungsabschnitt auf, welcher mit dem Fixierabschnitt zur Anlage kommt. Das Funktionselement ist insbesondere aus Kunststoff und bevorzugt aus Polypropylen (PP) ausgebildet.

Das Strukturbauteil ist insbesondere in einem Vorderwagen eines Kraftfahrzeuges angeordnet und erstreckt sich über einen Großteil der Breite des Vorderwagens. Vorzugsweise erstreckt sich das Strukturbauteil über mindestens 900 mm in Fahrzeugquerrichtung (y-Richtung) und bildet besonders bevorzugt eine Verbindung zwischen zwei Längsträgern. Das Strukturbauteil sorgt insoweit für eine Verbesserung der Steifigkeit in dem Vorderwagen. Das Strukturbauteil erstreckt sich in Fahrzeuglängsrichtung (x-Richtung) über mindestens 150 mm und maximal 400 mm. Bevorzugt handelt es sich bei dem Strukturbauteil um einen Schlossträger für ein Kraftfahrzeug. Der Schlossträger dient insbesondere neben der Anordnung des Funktionselements zur Anordnung eines Haubenschließsystems und/oder einer Frontschürze.

Der Fixierabschnitt ist an dem Strukturbauteil außerhalb eines Bereiches angeordnet, welcher Anforderungen hinsichtlich des Fußgängerschutzes unterliegt. Insbesondere ist der Fixierabschnitt in Fahrzeuglängsrichtung (x-Richtung) betrachtet auf der der Vorderseite eines Kraftfahrzeuges abgewandten Seite des Strukturbauteils angeordnet und in einer Anordnung in einem Vorderwagen mindestens 150 mm in Fahrzeuglängsrichtung (x-Richtung) betrachtet hinter der Hinterkante eines Stoßfängerquerträgers. In Fahrzeugquerrichtung (y-Richtung) betrachtet ist der Fixierabschnitt außermittig des Strukturbauteils und gut zugänglich angeordnet. Der Fixierabschnitt ist insbesondere in Fahrzeughochrichtung (z-Richtung) betrachtet in einer Höhe von 200 mm bis 350 mm oberhalb des Stoßfängerquerträgers angeordnet. Die Breite des Fixierabschnitts beträgt insbesondere zwischen 5 mm und 40 mm und vorzugsweise zwischen 10 mm und 20 mm.

Der Fixierabschnitt ist zumindest teilweise aus Kunststoff ausgebildet. Insbesondere ist der Fixierabschnitt nur aus Kunststoff ausgebildet oder alternativ aus einer Hybridstruktur, wie glasfaserverstärktem Kunststoff. Dabei eignet sich zum Beispiel PP-GF30. Ein Strukturbauteil mit einem solchen Fixierabschnitt, welcher zumindest teilweise aus Kunststoff gebildet ist, weist besondere Vorteile hinsichtlich des Gewichts auf. Kunststoff weist ein verhältnismäßig geringes Gewicht auf und Strukturbauelemente mit einem solchen Fixierabschnitt sind deshalb besonders zum Einsatz in Fahrzeugen mit Elektroantrieb geeignet. Vorteilhafterweise ist das gesamte Strukturbauteil zumindest teilweise aus Kunststoff ausgebildet und entsprechend besonders leicht. Eine Glasfaserverstärkung oder ein Metall-Insert können für eine zusätzliche Stabilität des Strukturbauteils eingesetzt werden. Ein solches Strukturbauteil kann zudem kostengünstig unter anderem mittels Spritzguss hergestellt werden.

In dem Fixierabschnitt ist eine Öffnung derart ausgebildet, dass ein Einführabschnitt des Funktionselements durch Einführen und Verschieben in einer Richtung quer zur Tiefenrichtung der Öffnung und/oder Verdrehen in einer Richtung quer zur Tiefenrichtung der Öffnung in eine Endmontagelage bringbar ist, wobei das Funktionselement in der Endmontagelage in Tiefenrichtung der Öffnung betrachtet formschlüssig gegenüber dem Strukturbauteil fixiert ist. Die vorstehende und/oder-Kombination ist so zu verstehen, dass das Einführen obligatorisch ist und sich dann entweder ein Verschieben oder ein Verdrehen oder ein Verschieben und Verdrehen anschließt, wobei die Reihenfolge des Verschiebens und Verdrehens im letzten Fall irrelevant ist und auch ein obligatorisches mehrmaliges Wechseln zwischen Verschieben und Verdrehen nicht ausgeschlossen sein soll.

Die erfindungsgemäße Anordnung ermöglicht eine besonders einfache Montage des Funktionselementes an dem Strukturbauteil, da lediglich zwei Bewegungen erforderlich sind (nämlich Einführen und Verschieben und/oder Einführen und Verdrehen), um eine formschlüssige Fixierung in Tiefenrichtung der Öffnung des Funktionselementes an dem Strukturbauteil zu bewirken. Auf zusätzliche Befestigungselemente und/oder Stützelemente, wie Schrauben oder an dem Strukturbauteil angeordnete Aufnahmen oder Adapter kann entsprechend verzichtet werden. Die erfindungsgemäße Anordnung kann demnach auch besonders kostengünstig hergestellt werden.

Der Einführabschnitt und der Fixierabschnitt sind derart gestaltet, dass der Einführabschnitt in Endmontagelage die Öffnung derart hindurchragend angeordnet ist, dass der Einführabschnitt einen Klemmabschnitt des Fixierabschnitts hintergreift und aufgrund der hintergreifenden Anordnung eine kraftschlüssige Fixierung zwischen Einführabschnitt und Fixierabschnitt bewirkt wird. Die hintergreifende Anordnung in der Endmontagelage kann besonders leicht hergestellt werden, wenn es sich bei der Öffnung um eine schlüssellochförmige Öffnung handelt und der Einführabschnitt pilzkopfförmig oder hakenförmig ausgebildet ist. Insbesondere wird mittels des den Klemmabschnitt hintergreifenden Einführabschnitts eine klemmende Fixierung des Funktionselementes an dem Strukturbauteil realisiert, welche besonders stabil gegenüber in einem Vorderwagen eines Kraftfahrzeuges während der Fahrt wirkenden Kräften ist.

Die Fixierung des Funktionselements an dem Strukturbauteil wird noch weiter verbessert, weil an dem Funktionselement eine federelastische Sperrlasche vorgesehen ist, welche in Endmontagelage eine formschlüssige Fixierung des Funktionselements gegenüber dem Strukturbauteil derart bewirkt, dass ein Rück-Verschieben und/oder ein Rück-Verdrehen aus der Endmontagelage formschlüssig gesperrt ist. Eine solche Zusammenwirkung der Sperrlasche mit dem Strukturbauteil reduziert das Risiko, dass sich das Funktionselement ungewollt von dem Strukturbauteil löst. Die federelastische Sperrlasche ist in der Endmontagelage insbesondere derart angeordnet, dass die Sperrlasche an der Innenseite der Öffnung anliegt. Insbesondere ist die federelastische Sperrlasche dazu an dem Einführabschnitt vorgesehen, welcher sich durch die Öffnung erstreckt. An der Sperrlasche ist darüber hinaus vorzugsweise ein Betätigungsabschnitt vorgesehen, mittels welchem die Sperrlasche aus der in der Endmontagelage fixierenden Position in eine eingefederte Position bewegt werden kann, in welcher dann ein Rück-Verschieben und/oder ein Rück-Verdrehen des Einführabschnitts in der Öffnung zur Lösung der Anordnung möglich ist.

Insbesondere weist das Funktionselement mindestens eine, sich Hochrichtung erstreckende Abstützrippe auf. Die Abstützrippe dient in der Endmontagelage zum Abstützen der auf das Funktionselement wirkenden Gewichtskraft. Dazu greift die Abstützrippe insbesondere in eine Vertiefung in dem Fixierabschnitt ein und wird insbesondere klemmend fixiert, indem die Abstützrippe und eine an dem Funktionselement ausgebildete Querrippe an gegenüberliegenden Flächen einer Wand der Vertiefung anliegen. Die Abstützrippe weist einen Eingreifabschnitt auf, welcher in Endmontagelage in eine Ausnehmung in dem Fixierabschnitt des Strukturbauteils eingreifend angeordnet ist und eine Verdrehsicherung darstellt.

In einer weiteren praktischen Ausführungsform weist das Funktionselement mindestens eine Querrippe auf, welche in Endmontagelage derart angeordnet ist, dass sich das Funktionselement mit der Querrippe an dem Strukturbauteil abstützt. Insbesondere weist das Funktionselement mehrere Querrippen auf und insbesondere eine gegenüber den anderen Querrippen hervorragende Querrippe, welche in einer Vertiefung in dem Fixierabschnitt angeordnet ist. Die Enden der Querrippen liegen an den Wandflächen der Vertiefung an und das Zusammenwirken der Querrippe und der Vertiefung stellt eine zusätzliche Sicherung gegenüber einem Verdrehen des Funktionselements an dem Fixierabschnitt dar.

Die mindestens eine, an dem Funktionselement ausgebildete Querrippe wirkt besonders vorteilhaft mit mindestens einer, an dem Strukturbauteil in dem Fixierabschnitt vorgesehenen Längsrippe zusammen. Vorzugsweise sind mehrere Längsrippen an dem Fixierabschnitt und Querrippen an dem Funktionselement derart vorgesehen, dass sich eine Gitterstruktur ergibt, die als Anlagefläche oder Anlagegitter bezeichnet werden kann. Ein solches Anlagegitter ist robust gegenüber angreifenden Kräften und es ist nur wenig Material zu dessen Erzeugung erforderlich. Zudem sind Längsrippen und Querrippen spritztechnisch gut herstellbar.

In Verbindung mit der Erfindung wird auch auf ein Kraftfahrzeug mit einer wie vorstehend beschriebenen Anordnung verwiesen, wobei sich der Fixierabschnitt in Einbaulage in einem Winkel schräg zur Fahrzeughochrichtung (z-Richtung) erstreckt und der Einführabschnitt derart ausgebildet ist, dass zur Montage des Funktionselementes ein sich zumindest teilweise in Fahrzeughochrichtung (z-Richtung) nach unten erstreckendes Verschieben erforderlich ist. Insbesondere ist an dem Funktionsbauteil ebenfalls ein, zu dem schräg zur Fahrzeughochrichtung (z-Richtung) verlaufenen Fixierabschnitt korrespondierender Befestigungsabschnitt ausgebildet. Diese schräge Ausbildung des Fixierabschnitts und ggf. des korrespondierenden Befestigungsabschnitts hat mehrere Vorteile: zum einen kann ein solcher schräg zur Fahrzeughochrichtung (z-Richtung) ausgebildeter Fixierabschnitt mit einer Öffnung in nur einer Richtung ohne den Einsatz von Schiebern entformt werden. Die Entformung erfolgt in Fahrzeughochrichtung. Weiterhin ermöglicht ein schräger Fixierabschnitt bzw. Befestigungsabschnitt eine einfache Montage durch sich teilweise nach unten erstreckendes Verschieben, und die Montage und das Halten in der Endmontagelage werden zusätzlich durch die Schwerkraftwirkung unterstützt.

Ferner wird in Verbindung mit der Erfindung auch auf einen Befüllstutzen für einen Waschwasserbehälter eines Kraftfahrzeuges verwiesen. Der Befüllstutzen weist einen Grundkörper auf, wobei an dem Grundköper ein Befestigungsabschnitt mit einem hakenförmig ausgebildeten Einführabschnitt und eine federelastische Sperrlasche ausgebildet sind. Insbesondere weist der Befestigungsabschnitt zusätzlich eine beabstandet zu dem Einführabschnitt ausgebildete Abstützrippe mit einem Eingreifabschnitt auf. Eine Kombination der vorstehend genannten Befestigungsmittel (Einführabschnitt, Sperrlasche, Abstützrippe), welche sich über die Höhe des Befestigungsabschnittes erstrecken, ermöglichen eine stabile Anbindung bzw. Fixierung des Befüllstutzens an einem dafür vorgesehen Fixierabschnitt, welcher besonders robust gegenüber möglichen Erschütterungen in einem Kraftfahrzeug ist. Ferner ermöglichen diese Befestigungsmittel eine einfache Montage mit nur wenigen Handgriffen und ohne zusätzliche separate Befestigungselemente. Die Befestigungsmittel sind zudem mittels Spritzguss herstellbar. Insbesondere ist der Befüllstutzen mit dem Grundkörper und dem Befestigungsabschnitt einstückig aus Kunststoff in einem Spritzgussverfahren hergestellt.

Darüber hinaus wird in Verbindung mit der Erfindung auch auf ein Verfahren zum Montieren eines Funktionselements eines Waschwasserbehälters an einem Fixierabschnitt eines Strukturbauteils eines Kraftfahrzeuges verwiesen, wobei der Fixierabschnitt zumindest teilweise aus Kunststoff ausgebildet ist und wobei in dem Fixierabschnitt eine Öffnung ausgebildet ist. Ein Einführabschnitt des Funktionselementes wird zur Herstellung einer Endmontagelage in die Öffnung eingeführt und anschließend in einer Richtung quer zur Tiefenrichtung der Öffnung verschoben und/oder verdreht. Das Funktionselement ist dann in der Endmontagelage in Tiefenrichtung der Öffnung betrachtet formschlüssig gegenüber dem Strukturbauteil fixiert. Wie bereits vorstehend beschrieben kann die Montage des Funktionselements an dem Waschwasserbehälter besonders einfach und insbesondere ohne zusätzliche Befestigungselemente erfolgen.

Weitere praktische Ausführungsformen der Erfindung sind nachfolgend im Zusammenhang mit den Zeichnungen beschrieben. Es zeigen:
- Fig. 1: ein Kraftfahrzeug in einer Seitenansicht,
- Fig. 2: eine erfindungsgemäße Anordnung in einem Vorderwagen eines Kraftfahrzeuges in einer Endmontagelage in einer perspektivischen Ansicht von schräg vorne,
- Fig. 3: die Anordnung aus Fig. 2 in einer perspektivischen Ansicht von schräg hinten,
- Fig. 4: den mit IV gekennzeichneten Bereich aus Fig. 3 in einer vergrößerten Ansicht,
- Fig. 5: die Anordnung aus Fig. 4 in einer Schnittdarstellung gemäß Linie V-V aus Fig. 4,
- Fig. 6: eine erste Ausführungsform eines Kraftfahrzeug-Schlossträgers in einer perspektivischen Ansicht von der Seite,
- Fig. 7: eine zweite Ausführungsform eines Kraftfahrzeug-Schlossträgers in einer perspektivischen Ansicht von der Seite,
- Fig. 8: einen Befüllstutzen in einer perspektivischen Ansicht von der Seite,
- Fig. 9: den Befüllstutzen aus Fig. 8 in einer Seitenansicht,
- Fig. 10: einen Ausschnitt des Kraftfahrzeug-Schlossträgers aus Fig. 6 in einer Draufsicht und
- Fig. 11: den Ausschnitt des Kraftfahrzeug-Schlossträgers aus Fig. 10 in einer Ansicht von unten.

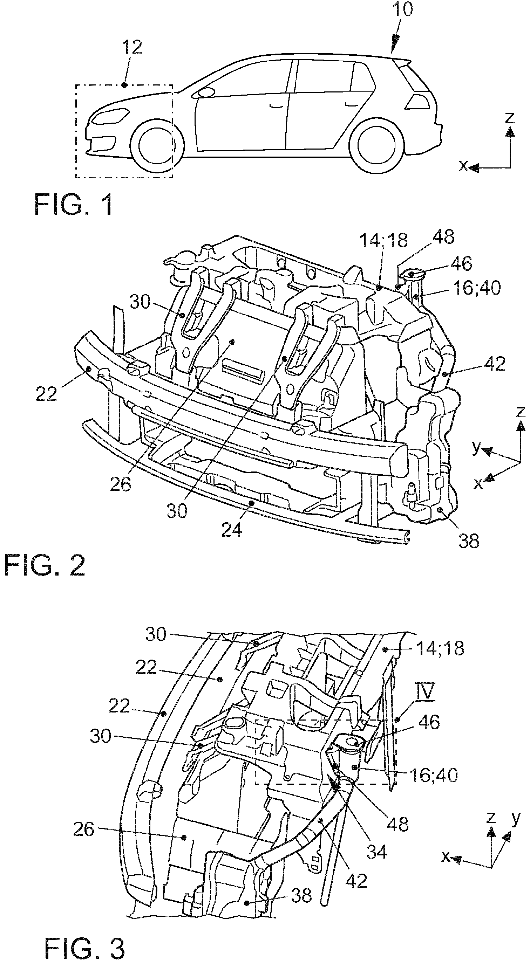

In Fig. 1 ist ein Kraftfahrzeug 10 in einer Seitenansicht dargestellt. Eine erfindungsgemäße Anordnung ist im Vorderwagen 12 des Kraftfahrzeuges 10 realisiert, welcher in Fig. 1 gestrichelt gekennzeichnet ist.

In den Fig. 2 und 3 ist ein Ausführungsbeispiel der erfindungsgemäßen Anordnung mit einem Funktionselement 16 und einem Strukturbauteil 14 in dem Vorderwagen 12 im Detail dargestellt, wobei die in Fahrzeuglängsrichtung vor dem Strukturbauteil 14 angeordneten Außenhautelemente (Stoßfängerverkleidung, Kühlergrill, Motorhaube etc.) nicht dargestellt sind.

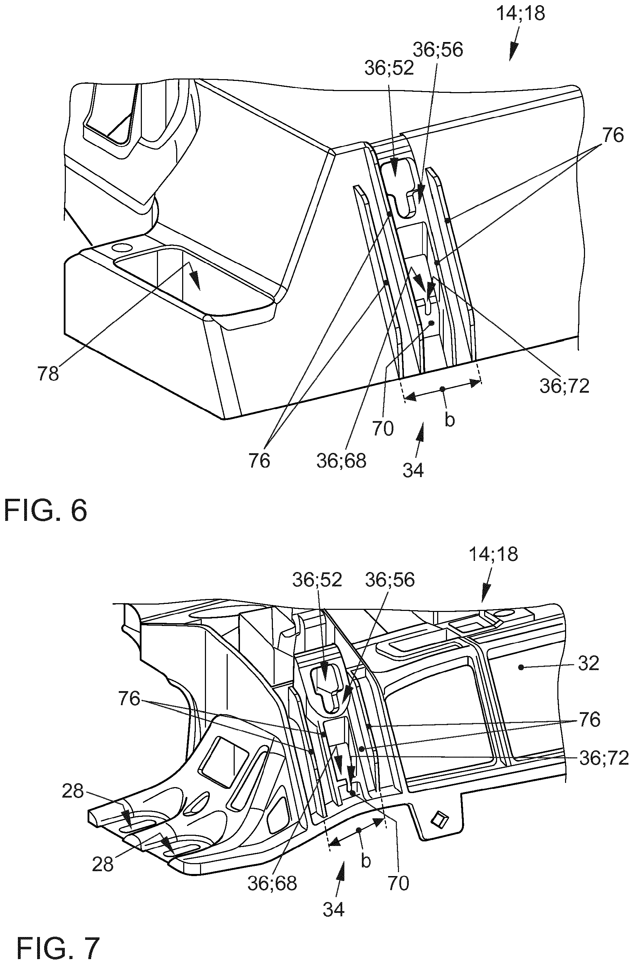

Bei dem Strukturbauteil 14 handelt es sich in dem Ausführungsbeispiel um einen Kraftfahrzeug-Schlossträger 18, welcher - in Fahrzeuglängsrichtung (x-Richtung) betrachtet - hinter einem Stoßfängerquerträger 20 mit einem Schaumteil 22, einem in Fahrzeughochrichtung (z-Richtung) darunter angeordneten Fußgängerschutzquerträger 24 und einem Luftleitelement 26 angeordnet ist. Das Strukturbauteil 14 erstreckt sich vorliegend in Fahrzeugquerrichtung (y-Richtung) zwischen zwei Längsträgern (nicht dargestellt). In dem Strukturbauteil 14 sind als Schraublöcher 28 dienende Öffnungen vorgesehen (vgl. Fig. 7), die zur - mittelbaren oder unmittelbaren - Befestigung der Strukturbauteils 14 an den Längsträgern dienen. In der in Fig. 6 erkennbaren Vertiefung 78 sind ein oder mehrere weitere, nicht erkennbare Schraublöcher. Wie in Fig. 2 gut erkennbar ist, dient das Strukturbauteil 14 vorliegend unter anderem zur Befestigung von zwei Schlossstützen 30.

Das Strukturbauteil 14 ist in den Fig. 6 und 7 in verschiedenen Ausführungsformen separat dargestellt. In der in Fig. 6 gezeigten ersten Ausführungsform ist das Strukturbauteil 14 nur aus glasfaserverstärktem Kunststoff hergestellt.

Die zweite Ausführungsform in Fig. 7 ist aus Kunststoff hergestellt und weist ein Metall-Insert 32 auf. Die beiden Ausführungsformen sind insofern gleich, als sie einen Fixierabschnitt 34 aus Kunststoff mit denselben Fixiermitteln 36 aufweisen und entsprechend an beiden ein identisches Funktionselement 16 vorgesehen ist.

Wie in den Fig. 2 bis 5 gut erkennbar, ist der Fixierabschnitt 34 an der der Fahrzeugfront abgewandten Seite des Strukturbauteils 14 angeordnet. Der Fixierabschnitt 34 ist an dem Strukturbauteil 14 in einem in Fahrzeugquerrichtung (y-Richtung) betrachtet außermittigen, gut zugänglichen Bereich, vorliegend in Fahrtrichtung betrachtet auf der rechten Seite des Strukturbauteils 14 angeordnet. Die Breite b des Fixierabschnitts 34 beträgt hier 15 mm.

In dem Vorderwagen 12 ist außerdem ein Waschwasserbehälter 38 mit einem Befüllstutzen 40 und ein den Befüllstutzen 40 und den Waschwasserbehälter 38 verbindenden Schlauch 42 angeordnet. Der Befüllstutzen 40 ist an dem Fixierabschnitt 34 des Strukturbauteils 14 in der in den Fig. 2 bis 5 gezeigten Endmontagelage fixiert und dient insoweit als ein Funktionselement 16.

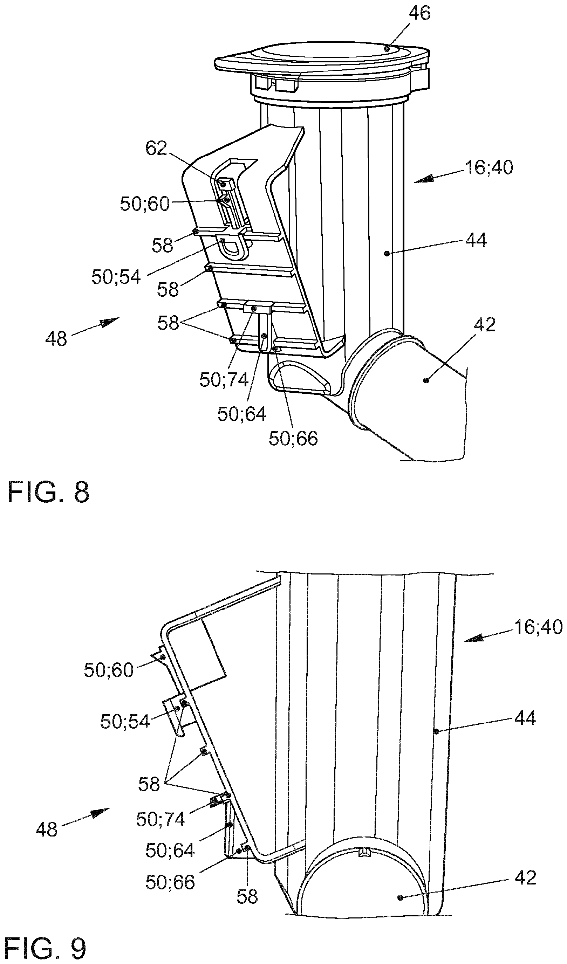

In den Fig. 8 und 9 ist der Befüllstutzen 40 im Detail dargestellt. Der Befüllstutzen 40 umfasst einen Grundkörper 44, welcher zum Einfüllen von Waschwasser dient und welcher mit einem Deckel 46 verschlossen ist. Vorliegend sind der Deckel 46 und der Grundkörper 44 miteinander verclipst. Von dem Grundkörper 44 erstreckt sich zudem ein Befestigungsabschnitt 48 mit mehreren Befestigungsmitteln 50, mittels welchen der Befüllstutzen 40 in dem Fixierabschnitt 34 an dem Strukturelement 14 befestigt wird.

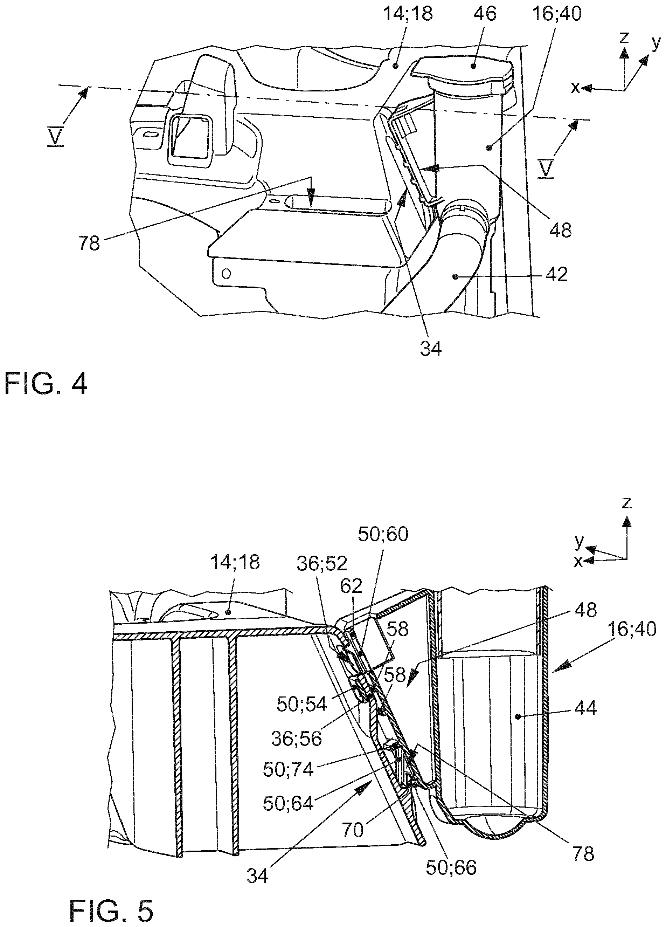

Im Folgenden wird in Zusammenhang mit den Fig. 4 bis 9 die Anordnung des Funktionselementes 16 an dem Strukturbauteil 14 im Detail erläutert.

In dem Fixierabschnitt 34 ist eine schlüssellochförmige Öffnung 52 ausgebildet (vgl. Fig. 6 und 7). Dazu korrespondierend ist an dem Befestigungsabschnitt 48 des Funktionselementes 16 ein hakenförmiger oder auch pilzkopfförmiger Einführabschnitt 54 ausgebildet (vgl. Fig. 8 und 9). Der Einführabschnitt 54 wird durch die Öffnung 52 eingeführt und dann mittels Verschieben in einer Richtung quer zur Tiefenrichtung der Öffnung 52, hier in Fahrzeughochrichtung (z-Richtung) nach unten, derart angeordnet, dass er einen an dem Fixierabschnitt 34 ausgebildeten Klemmabschnitt 56 hintergreift (vgl. Fig. 5). Entsprechend wird eine formschlüssige Fixierung des Funktionselementes 16 an dem Strukturbauteil 14 in einer Tiefenrichtung der Öffnung 52 erzeugt. Zudem wird eine Klemmung durch den den Klemmabschnitt 56 hintergreifenden Teil des Einführabschnitts 54 und eine an dem Klemmabschnitt 56 anliegende Querrippe 58 erzeugt (vgl. Fig. 5).

An dem Einführabschnitt 54 ist eine federelastische Sperrlasche 60 ausgebildet, welche in einer in den Fig. 4 und 5 im Detail gezeigten Endmontagelage an der Innenseite der Öffnung 52 anliegend angeordnet ist. Die Sperrlasche 60 verhindert insoweit ein Rück-Verschieben des Einführabschnitts 54 in Fahrzeughochrichtung (z-Richtung) nach oben. An der Sperrlasche 60 ist ein Betätigungsabschnitt 62 angeordnet, mittels welchem die federelastische Sperrlasche 60 aus der Öffnung 52 bewegt werden kann und somit ein Rück-Verschieben und ebenfalls ein Demontieren des Funktionselementes 16 von dem Fixierabschnitt 34 ermöglicht ist.

Zur verbesserten Fixierung der Anordnung weist das Funktionselement 16 in dem Befestigungsabschnitt 48 eine sich hier in Fahrzeughochrichtung (z-Richtung) erstreckende Abstützrippe 64 mit einem Eingreifabschnitt 66 auf (vgl. Fig. 8 und 9). Die Abstützrippe 64 stützt sich in einer an dem Fixierabschnitt 34 ausgebildeten Vertiefung 68 ab. Auch hier kann optional eine klemmende Fixierung durch die Abstützrippe 64 und eine Querrippe 58, welche an gegenüberliegenden Flächen einer Wand 70 der Vertiefung 68 anliegen, erzielt werden. Außerdem greift der Eingreifabschnitt 66 in der Endmontagelage in eine an dem Fixierabschnitt 34 in der Wand 70 ausgebildete Ausnehmung 72 ein (vgl. Fig. 5), wodurch eine Führung (insbesondere während der Montage) und eine Verdrehsicherung (insbesondere während der Nutzung) realisiert ist.

Wie bereits vorstehend erwähnt, weist der Befestigungsabschnitt 48 mehrere Querrippen 58 auf, wobei vorliegend eine Querrippe 74 gegenüber den anderen Querrippen 58 hervorragt. Diese Querrippe 74 kommt mit ihren Enden an Wandflächen der Vertiefung 68 zur Anlage und wirkt entsprechend ebenfalls als eine Verdrehsicherung.

Benachbart zu der Öffnung 52 weist das Strukturbauteil 14 an dem Fixierabschnitt 16 parallel zueinander verlaufende Längsrippen 76 auf, so dass sich in der in den Fig. 2 bis 5 gezeigten Endmontagelage ein Anlagegitter aus den Längsrippen 76 und den an dem Befestigungsabschnitt 48 ausgebildeten Querrippen 58 ergibt.

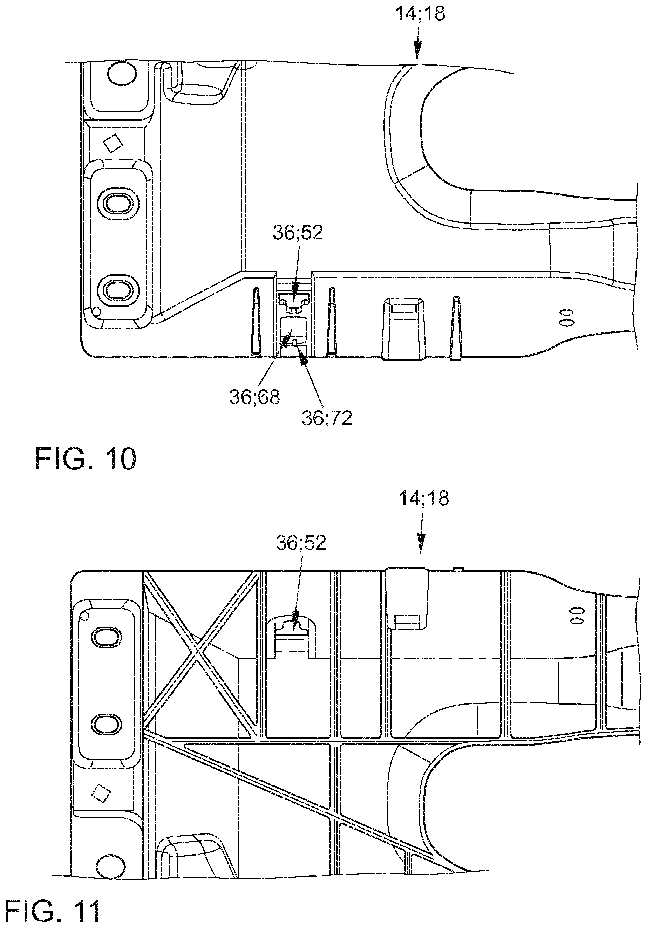

Wie in den Fig. 5 bis 7 gut zu erkennen ist, erstreckt sich der Fixierabschnitt 34 an dem Strukturbauteil 14 schräg zur Fahrzeughochrichtung (z-Richtung). Damit kann das Strukturbauteil 14 in Fahrzeughochrichtung (z-Richtung) entformt werden. Das Strukturbauteil 14 ist in den Fig. 10 und 11 einmal von der Oberseite und von der Unterseite gezeigt. Es ist erkennbar, dass der Fixierabschnitt 34 mit den Fixiermitteln 36 und das gesamte Strukturbauteil 18 in einer Richtung aus der Blattebene (z-Richtung) heraus ohne Schieber entformt werden kann.

### Bezugszeichenliste

- 10: Kraftfahrzeug
- 12: Vorderwagen
- 16: Funktionselement
- 14: Strukturbauteil
- 18: Kraftfahrzeug-Schlossträger
- 20: Stoßfängerquerträger
- 22: Schaumteil
- 24: Fußgängerschutzquerträger
- 26: Luftleitelement
- 28: Schraublöcher
- 30: Schlossstütze
- 32: Metall-Insert
- 34: Fixierabschnitt
- 36: Fixiermittel
- 38: Waschwasserbehälter
- 40: Befüllstutzen
- 42: Schlauch
- 44: Grundkörper
- 46: Deckel
- 48: Befestigungsabschnitt
- 50: Befestigungsmittel
- 52: Öffnung
- 54: Einführabschnitt
- 56: Klemmabschnitt
- 58: Querrippe
- 60: Sperrlasche
- 62: Betätigungsabschnitt
- 64: Abstützrippe
- 66: Eingreifabschnitt
- 68: Vertiefung
- 70: Wand
- 72: Ausnehmung
- 74: hervorragende Querrippe
- 76: Längsrippe
- 78: Vertiefung

## Patentansprüche

1. Anordnung eines separaten Funktionselements (16) eines Waschwasserbehälters (38) an einem Fixierabschnitt (34) eines Strukturbauteils (14) eines Kraftfahrzeuges (10), wobei der Fixierabschnitt (34) zumindest teilweise aus Kunststoff ausgebildet ist und wobei in dem Fixierabschnitt (34) eine Öffnung (52) derart ausgebildet ist, dass ein Einführabschnitt (54) des Funktionselements (16) durch Einführen und Verschieben und/oder Verdrehen in einer Richtung quer zur Tiefenrichtung der Öffnung (52) in eine Endmontagelage bringbar ist, wobei das Funktionselement (16) in der Endmontagelage in Tiefenrichtung der Öffnung (52) betrachtet formschlüssig gegenüber dem Strukturbauteil (14) fixiert ist,
**dadurch gekennzeichnet,**
a) **dass** der Einführabschnitt (54) und der Fixierabschnitt (34) derart gestaltet sind, dass der Einführabschnitt (54) in Endmontagelage die Öffnung (52) derart hindurchragend angeordnet ist, dass der Einführabschnitt (54) einen Klemmabschnitt (56) des Fixierabschnitts (34) hintergreift und aufgrund der hintergreifenden Anordnung eine kraftschlüssige Fixierung zwischen Einführabschnitt (54) und Fixierabschnitt (34) bewirkt ist, und/oder
b) **dass** an dem Funktionselement (16) eine federelastische Sperrlasche (60) vorgesehen ist, welche in Endmontagelage eine formschlüssige Fixierung des Funktionselements (16) gegenüber dem Strukturbauteil (14) derart bewirkt, dass ein Rück-Verschieben und/oder ein Rück-Verdrehen aus der Endmontagelage formschlüssig gesperrt ist.

2. Anordnung nach dem vorstehenden Anspruch, **dadurch gekennzeichnet, dass** das Funktionselement (16) mindestens eine, sich in Hochrichtung erstreckende Abstützrippe (64) mit einem Eingreifabschnitt (66) aufweist, welcher in Endmontagelage in eine Ausnehmung (72) in dem Fixierabschnitt (34) des Strukturbauteils (14) eingreifend angeordnet ist.

3. Anordnung nach einem der vorstehenden Ansprüche, **dadurch gekennzeichnet, dass** das Funktionselement (14) mindestens eine Querrippe (58) aufweist, welche in Endmontagelage derart angeordnet ist, dass sich das Funktionselement (16) mit der Querrippe (58) an dem Strukturbauteil (14) abstützt.

4. Anordnung nach einem der vorstehenden Ansprüche, **dadurch gekennzeichnet, dass** das Strukturbauteil (14) in dem Fixierabschnitt (34) mindestens eine Längsrippe (76) aufweist.

5. Kraftfahrzeug mit einer Anordnung nach einem der vorstehenden Ansprüche, **dadurch gekennzeichnet, dass** sich der Fixierabschnitt (34) in Einbaulage in einem Winkel schräg zur Fahrzeughochrichtung erstreckt und der Einführabschnitt (54) derart ausgebildet ist, dass zur Montage des Funktionselements (16) ein sich zumindest teilweise in Fahrzeughochrichtung nach unten erstreckendes Verschieben erforderlich ist.

## Claims

1. Arrangement of a separate functional element (16) of a washing water container (38) on a fixing portion (34) of a structural component (14) of a motor vehicle (10), the fixing portion (34) being made of plastics material at least in part and an opening (52) being formed in the fixing portion (34) in such a way that an insertion portion (54) of the functional element (16) can be brought into a final mounting position by insertion and displacement and/or rotation in a direction transverse to the depth direction of the opening (52), the functional element (16) being form-fittingly fixed with respect to the structural component (14) in the final mounting position as viewed in the depth direction of the opening (52),
**characterized**
a) **in that** the insertion portion (54) and the fixing portion (34) are designed such that the insertion portion (54), in the final mounting position, is arranged so as to project through the opening (52) in such a way that the insertion portion (54) engages behind a clamping portion (56) of the fixing portion (34) and a force-fitting fixing between the insertion portion (54) and the fixing portion (34) is brought about due to the engaging arrangement, and/or
b) **in that** a resilient locking tab (60) is provided on the functional element (16), which locking tab, in the final mounting position, brings about a form-fitting fixing of the functional element (16) with respect to the structural component (14) in such a way that a backward displacement and/or a backward rotation out of the final mounting position is blocked in a form-fitting manner.

2. Arrangement according to the preceding claim, **characterized in that** the functional element (16) has at least one supporting rib (64) which extends in the vertical direction and has an engagement portion (66) which, in the final mounting position, is arranged so as to engage in a recess (72) in the fixing portion (34) of the structural component (14).

3. Arrangement according to either of the preceding claims,
**characterized in that** the functional element (14) has at least one transverse rib (58) which, in the final mounting position, is arranged such that the functional element (16) is supported with the transverse rib (58) on the structural component (14).

4. Arrangement according to any of the preceding claims,
**characterized in that** the structural component (14) has at least one longitudinal rib (76) in the fixing portion (34).

5. Motor vehicle having an arrangement according to any of the preceding claims, **characterized in that** in the installed position, the fixing portion (34) extends at a slant angle to the vertical direction of the vehicle and the insertion portion (54) is designed such that a displacement extending downwards at least in part in the vertical direction of the vehicle is required for mounting the functional element (16).

## Revendications

1. Agencement d'un élément fonctionnel séparé (16) d'un réservoir d'eau de lavage (38) sur une section de fixation (34) d'un composant structurel (14) d'un véhicule automobile (10), dans lequel la section de fixation (34) est formée au moins partiellement en plastique et dans lequel, dans la section de fixation (34), une ouverture (52) est formée de sorte qu'une section d'introduction (54) de l'élément fonctionnel (16) puisse être amenée dans une position de montage finale par introduction et déplacement et/ou rotation dans une direction transversale à la direction de la profondeur de l'ouverture (52), dans lequel l'élément fonctionnel (16) est fixé dans la position de montage finale, observé dans la direction de profondeur de l'ouverture (52), par complémentarité de formes par rapport au composant structurel (14),
**caractérisé en ce**
a) **que** la section d'introduction (54) et la section de fixation (34) sont conçues de telle sorte que la section d'introduction (54) soit agencée dans la position de montage finale traversant l'ouverture (52) de sorte que la section d'introduction (54) entre en prise par l'arrière avec une section de serrage (56) de la section de fixation (34) et, en raison de l'agencement de prise par l'arrière, une fixation par force soit provoquée entre la section d'introduction (54) et la section de fixation (34) et/ou
b) **que**, sur l'élément fonctionnel (16), une languette de verrouillage élastique (60) est prévue, qui, dans la position de montage finale, provoque une fixation par complémentarité de formes de l'élément fonctionnel (16) par rapport au composant structurel (14) de sorte qu'un déplacement en arrière et/ou une rotation en arrière à partir de la position de montage finale soit bloquée par complémentarité de formes.

2. Agencement selon la revendication précédente, **caractérisé en ce que** l'élément fonctionnel (16) présente au moins une nervure de support (64) s'étendant dans la direction de la hauteur avec une section d'accouplement (66), qui est agencée dans la position de montage finale dans une cavité (72) dans la section de fixation (34) du composant structurel (14) par accouplement.

3. Agencement selon l'une quelconque des revendications précédentes, **caractérisé en ce que** l'élément fonctionnel (14) présente au moins une nervure transversale (58), qui est agencée dans la position de montage finale de sorte que l'élément fonctionnel (16) vienne en appui avec la nervure transversale (58) sur le composant structurel (14).

4. Agencement selon l'une quelconque des revendications précédentes, **caractérisé en ce que** le composant structurel (14) comporte dans la section de fixation (34) au moins une nervure longitudinale (76).

5. Véhicule automobile comprenant un agencement selon l'une quelconque des revendications précédentes, **caractérisé en ce que** la section de fixation (34) s'étend dans la position d'installation selon un angle oblique par rapport à la direction de hauteur du véhicule et la section d'introduction (54) est conçue de sorte que pour le montage de l'élément fonctionnel (16), un déplacement s'étendant au moins partiellement vers le bas dans la direction de hauteur du véhicule soit nécessaire.
